# EUROPEAN PATENT SPECIFICATION

(11) **EP 2 425 481 B1**
(45) Date of publication and mention of the grant of the patent: **03.07.2013**
(21) Application number: 10707565.7
(22) Date of filing: 22.02.2010
(51) Int. Cl.: H01M 8/04

(54) **IMPROVED FUEL FLEXIBILITY CONFIGURATION IN HIGH TEMPERATURE FUEL CELL SYSTEMS**
KONFIGURATION ZUR VERBESSERTEN BRENNSTROFFFLEXIBILITÄT IN HOCHTEMPERATURBRENNSTOFFZELLENSYSTEMEN
CONFIGURATION DE FLEXIBILITÉ AMÉLIORÉE DE COMBUSTIBLE DANS DES SYSTÈMES DE PILES À COMBUSTIBLE À HAUTE-TEMPÉRATURE

(30) Priority: 26.02.2009 FI 20095190
(43) Date of publication of application: 07.03.2012
(73) Proprietor: Convion Oy, 02150 Espoo (FI)
(72) Inventor: HOTTINEN, Tero, FI-08680 Lohja (FI); ÅSTRÖM, Kim, FI-02400 Kirkkonummi (FI); KIVISAARI, Timo, FI-00630 Helsinki (FI)
(74) Representative: LEITZINGER OY
(86) International application number: PCT/FI2010/050117
(87) International publication number: WO 2010/097506

(56) References cited:
- JP-A- 2006 049 056
- JP-A- 2006 086 117
- JP-A- 2006 140 103
- US-A- 5 498 487
- US-A1- 2007 134 526

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed. Fuel cell device are promising future energy conversion device by means of which fuel, for example bio gas, is directly transformed to electricity via a chemical reaction in an environmentally friendly process.

### The state of the art

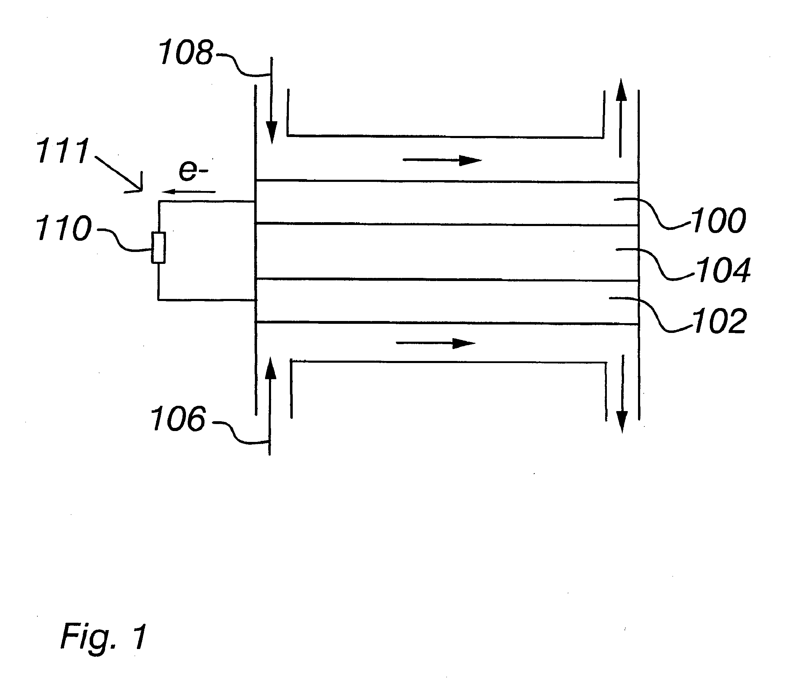

Fuel cell, as presented in fig 1, comprises an anode side 100 and a cathode side 102 and an electrolyte material 104 between them. In solid oxide fuel cells (SOFCs) oxygen is fed to the cathode side 102 and it is reduced to a negative oxygen ion by receiving electrons from the anode via an external electrical circuit 111. The negative oxygen ion goes through the electrolyte material 104 to the anode side 100 where it reacts with the used fuel producing water and also typically carbondioxide (CO2). Between anode 100 and cathode 102 is the external electric circuit 111 comprising a load 110 for the fuel cell.

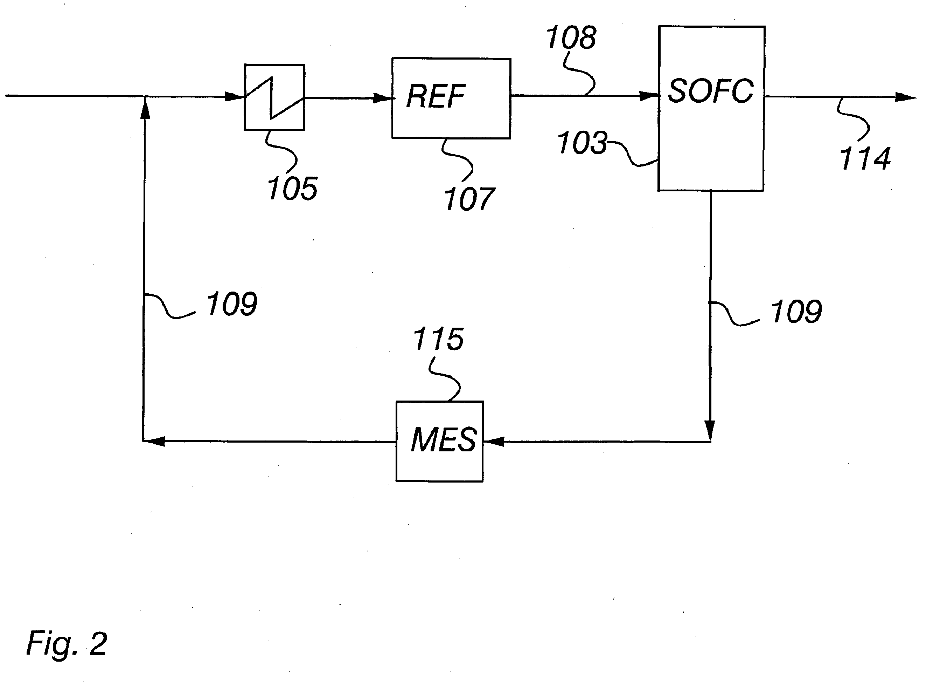

In figure 2 is presented a SOFC device as an example of a high temperature fuel cell device. SOFC device can utilize as fuel for example natural gas, bio gas, methanol or other compounds containing hydrocarbon mixtures. SOFC device in figure 2 comprises more than one, typically plural of fuel cells in stack formation 103 (SOFC stack). Each fuel cell comprises anode 100 and cathode 102 structure as presented in figure 1. Part of the used fuel is recirculated in feedback arrangement 109 through each anode. SOFC device in fig 2 also comprises fuel heat exchanger 105 and reformer 107. Heat exchangers are used for controlling thermal conditions in fuel cell process and there can be located more than one of them in different locations of SOFC device. The extra thermal energy in circulating gas is recovered in one or more heat exchanger 105 to be utilized in SOFC device or outside heat recovering unit. Reformer 107 is a device that converts the fuel such as for example natural gas to a composition suitable for fuel cells, for example to a composition containing hydrogen and methane, carbondioxide, carbonmonoxide and inert gases. Anyway in each SOFC device it is though not necessary to have a reformer.

By using measurement means 115 (such as fuel flow meter, current meter and temperature meter) is carried out necessary measurements for the operation of the SOFC device from the through anode recirculating gas. Only part of the gas used at anodes 100 is recirculated through anodes in feedback arrangement 109 and the other part of the gas is exhausted 114 from the anodes 100.

A solid oxide fuel cell (SOFC) device is an electrochemical conversion device that produces electricity directly from oxidizing a fuel. Advantages of SOFC device include high efficiencies, long term stability, low emissions, and cost. The main disadvantage is the high operating temperature which results in long start up times and both mechanical and chemical compatibility issues.

Large solid oxide fuel cell systems have lots of components, such as blowers, reactors, and heat exchangers, that have to be sized for nominal operation point. Especially in case of heat exchangers, the efficiency is radically altered when the flow differs too much from the sizing values. In addition, in large systems the heat capacity of the components is high causing slow temperature level stabilization, which in turn affects the functioning of temperature-sensitive fuel cell system components, such as reformers and fuel cell stacks. These effects cause that the operation of a solid oxide fuel cell system in some other operation point than the nominal sizing point may be difficult, or at least causes a decrease in system efficiency. Different operating points may include variations in required power output, possible fluctuations in fuel quality which is the case e.g. in several biogases, and need to operate the SOFC system with some other fuel than the fuel SOFC system was designed for. This is the need for so-called dual-fuel capability that is not reached in prior art solutions with reasonable efficiencies.

### Short description of the invention

The object of the invention is to accomplish a fuel cell system that in different situations with minimal changes in system configuration can utilize gases that may have big differences in fuel composition such as in percentage of methane. This can be achieved by a high temperature fuel cell system for producing electricity with fuel cells, each fuel cell comprising an anode side, a cathode side, and an electrolyte between the anode side and the cathode side, and the fuel cell system comprising at least one heat exchanger for arranging wanted temperature conditions in the fuel cell system. The high temperature fuel cell system comprises means for determining gas composition at the anode sides by obtaining at least amounts of oxygen (O) and carbon (C) for providing as composition information at least the relationship between the amounts of oxygen and carbon (O/C relationship) in said gas, means for performing controlled gas recirculation at anode sides by using said composition information as control information, means for performing controlled auxiliary water feed to the fuel cell system by using said composition information as control information, means for performing controlled gas feed in to the fuel cell system by using said composition information as control information, means for controlling the rated power of the fuel cell system by controlling anode flow characteristics between said controlled gas recirculation at anode sides and said controlled auxiliary water feed, and the means for controlling the rated power of the fuel cell system by controlling said means for performing said controlled auxiliary water feed to the fuel cell system by using said composition information as control information by changing said water feed, when a need for such change is detected on the basis of the determined gas composition, by controlling said means for performing controlled gas recirculation at anode sides by using said composition information as control information by changing said gas recirculation, when a need for such change is detected on the basis of the determined gas composition, and by controlling said means for performing controlled gas feed in to the fuel cell system by using said composition information as control information by changing said gas feed, when a need for such change is detected on the basis of the determined gas composition, to change the rated power of the fuel cell system to keep electricity production conditions substantially optimal for the gas used as fuel in the high temperature fuel cell system.

The focus of the invention is also a method for producing electricity in high temperature fuel cell system, in which method wanted temperature conditions are arranged for producing electricity with fuel cells, and an auxiliary water feed is arranged to the fuel cell system. In the method gas used as fuel is recirculated at the anode sides, and a gas composition at the anode sides is determined by obtaining at least amounts of oxygen (O) and carbon (C) for providing as composition information at least the relationship between the amounts of oxygen and carbon (O/C relationship) in said gas, controlling of the rated power is accomplished by controlling anode flow characteristics between the gas recirculation at anode sides and the auxiliary water feed, and the rated power of the fuel cell system is controlled by performing controlled auxiliary water feed to the fuel cell system by using said composition information as control information by changing said water feed, when a need for such change is detected on the basis of the determined gas composition, by performing controlled gas recirculation at the anode sides by using said composition information as control information by changing said gas recirculation, when a need for such change is detected on the basis of the determined gas composition, and by performing controlled gas feed in to the fuel cell system by using said composition information as control information by changing said gas feed, when a need for such change is detected on the basis of the determined gas composition, to change the rated power of the fuel cell system to keep electricity production conditions substantially optimal for the gas used as fuel in the high temperature fuel cell system.

The invention is based on that anode flow characteristics between auxiliary water feed system and anode gas recirculation system is controlled by utilizing anode gas composition information by changing said auxiliary water feed, when such a need arises, by changing said gas recirculation, when such a need arises, and by changing gas feed in to fuel cell system, when such a need arises, to change the rated power of the fuel cell system to ensure substantially optimal electricity production conditions even when the gas used in the fuel cell system is changed to a substantially different type of gas.

The benefit of the invention is that a nominal gas used in the high temperature fuel cell system can be changed with minimal changes in system configuration. This can be achieved even so that the same fuel device is used for gases that have very big differences in fuel composition such as in percentage of methane without a need to build up parallel fuel cell device for different gases.

### Short description of figures

- Figure 1: presents a single fuel cell structure.
- Figure 2: presents an example of a SOFC device.
- Figure 3: presents a preferred embodiment according to the present invention.

### Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched in between the electrodes, anode 100 and cathode 102. SOFCs can also be made in tubular geometries where for example either air or fuel is passed through the inside of the tube and the other gas is passed along the outside of the tube. This can be also arranged so that the gas used as fuel is passed through the inside of the tube and air is passed along the outside of the tube. The tubular design is better in sealing air from the fuel. Anyway the performance of the planar design is better than the performance of the tubular design however, because the planar design has a lower resistance comparatively. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach very high temperature and as a consequence of this the stacks have to be heated at temperatures ranging from 600 to 1,000 °C. Reduction of oxygen (Fig. 1) into oxygen ions occurs at the cathode 102. These ions can then be transferred through the solid oxide electrolyte 104 to the anode 100 where they can electrochemically oxidize the gas used as fuel. In this reaction, a water and carbondioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane), different biogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks or (partially) internally within the stacks 103. The reforming reactions require certain amount of water, and additional water is also needed to prevent possible carbon formation (coking) caused by higher hydrocarbons. This water can be provided internally by circulating the anode gas exhaust flow, because water is produced in excess amounts in fuel cell reactions, and/or with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water.

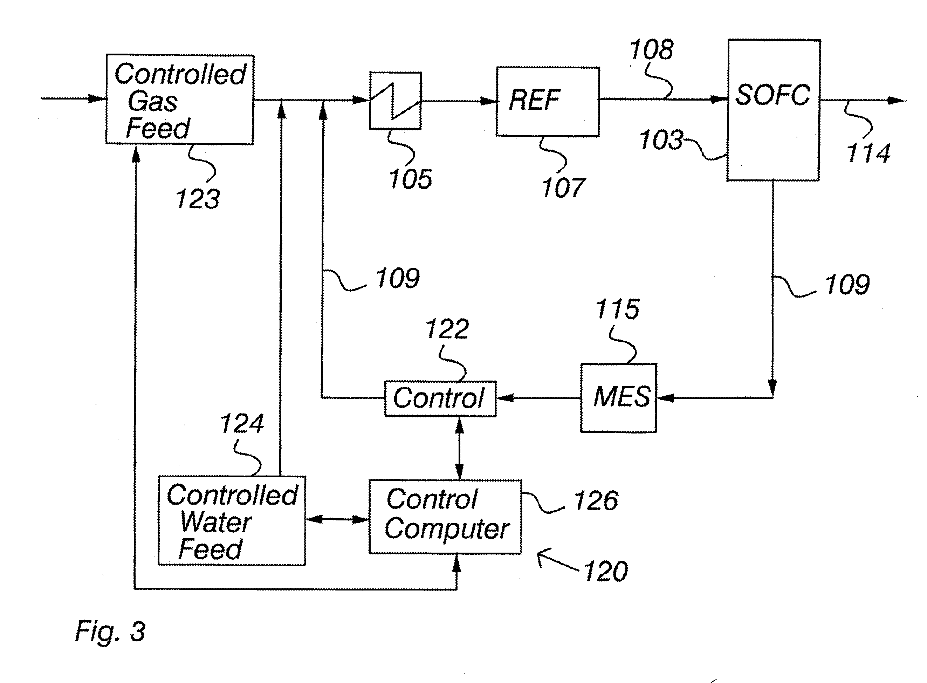

Figure 3 presents an exemplary preferred embodiment according to the present invention where the operation mode and ratios between anode recirculation and auxiliary water feed, the anode flow characteristics through gas processing reactors, heat exchangers and fuel cell stacks can be kept roughly constant with simultaneously ensuring adequate water amount for reforming reactions and preventing coking. This solid oxide fuel cell system comprises means 120 for determining a gas composition at anode sides 100 for providing a composition information. In this preferred embodiment of the invention this composition information is the relationship between oxygen and carbon, i.e. O/C relationship, in said gas used as fuel. Composition information may also comprise water volume information and/or the relationship between hydrogen and carbon, i.e. H/C relationship. Both O/C relationship and/or water volume information and/or H/C relationship are preferably determined by calculating process and thus said means 120 for determining a gas composition are for example a calculating processor located in a computer 126 or in some other device. Of course said means 120 may also be measurement equipment to measure desired values from the gas flow.

This solid oxide fuel cell system (Fig 3) according to the preferred embodiment of the invention further comprises at least one heat exchanger 105 for arranging wanted temperature conditions in the fuel cell system. The composition information can be also utilized for the heat exchanger by using a passing arrangement for directing the operation of the said at least one heat exchanger. The efficiency of the said at least one heat exchanger may even be controllable by using said passing arrangement that utilizes composition information. This passing arrangement comprises one or more pipe(s) passing direct steam flow or anode recirculation feed or combination of these.

Said composition information is utilized by means 122 for performing controlled gas recirculation at anode sides 100 by changing the amount and/or temperature of the gas. Said composition information is also utilized by means 124 for performing controlled auxiliary water feed to the fuel cell system by changing the amount and/or temperature of the water. The embodiments according to the invention also comprise means 123 for performing controlled gas feed in to the fuel cell system by utilizing said composition information by changing the amount and/or temperature of the gas. These all means 122, 123, 124 for controlling comprise one or more control processor(s) located for example in the same control computer 126 or separately as figure 3 presents with means 122, 123, 124.

When the gas used as fuel is exchanged for example from natural gas to bio gas, the rated power of the fuel cell system is changed to keep electricity production conditions substantially optimal for the gas used as fuel in the solid oxide fuel cell system. This is accomplished by means 126 for controlling the rated power of the solid oxide fuel cell system by controlling said means 124 for performing controlled auxiliary water feed to the fuel cell system by utilizing said composition information as described, by controlling said means 122 for performing controlled gas recirculation at anode sides 100 by utilizing said composition information as described and by controlling said means 123 for performing controlled gas feed in to the fuel cell system by utilizing said composition information as described. Also means 126 for controlling the rated power of the solid oxide fuel cell system comprise one or more control processor(s) located for example in the control computer 126 as presented in figure 3. Though means 126 are named as computer, the invention can be accomplished with means 126 comprising for example only one control logic circuit or equivalent.

In the preferred embodiment of the invention this controlling of the rated power with controlling means 126 is accomplished by controlling the anode flow characteristics between gas recirculation at anode sides and auxiliary water feed by using said means 120 for determining gas composition and by using said controlling means 122 and/or 123 and/or 124 as described. As shown with two directional arrows in figure 3 there can be two directional control information flows between controlling means 122, 123, 124 and 126 for example to provide feedback information to controlling means 126 so that the described controlling arrangement according to the invention actively follows the state of the control process in the fuel cell system.

As well as described with SOFCs the present invention can also be utilized with MCFCs (Molten Carbonate Fuel Cells) and other high temperature fuel cells that operate at 400 °C and higher temperatures. MCFCs are high-temperature fuel cells that use an electrolyte composed of a molten carbonate salt mixture suspended in a porous, chemically inert ceramic matrix of BASE, Beta-Alumina Solid Electrolyte.

The present invention makes possible that the same SOFCs (or MCFCs or other) system parts and components can be used successfully in dual-fuel (eg. natural gas, bio gas) operation system. The system can be on/off type that comprises a switch to select a operation mode according to the gas that is to be used. In the preferred embodiment of the invention (Fig. 3) the system is preferably an automatic control system that changes its operation mode following the changes in gas composition as described. The methane content in used gas is allowed to vary between almost 100% (natural gas) to even such low as 30% or lower ("dirty" bio gas). In the preferred embodiment of the invention many, or even all, of the SOFC system parts and components are common for different gas types used as fuel. Anyway, if it is somehow reasonable, the invention can also be utilized so that only few of the SOFC system parts and components are common for different gas types used as fuel.

These achievements according to the invention are especially important when using diluted biogas as fuel, because the anode recirculation according to the prior art would cause inerts to built-up into the loop causing extremely high anode recirculation flows to provide adequate amount of water. This would cause the gas processing components and parts to be over-dimensioned when changed from bio gas application to natural gas application according to the prior art. By changing the ratio between anode recirculation and auxiliary water feed according to the invention, the same system parts and components can be used in different gases operation and the system power and especially efficiency remain in good or at least reasonable values.

The invention applies similarly for possible needs to control the power output, and hence in controlling the required inlet fuel flow to maintain high efficiency. The invention applies similarly also for possible fluctuations in fuel quality, which is the case e.g. in typical biogas applications. In the prior art system with high fluctuation there must be high safety margin to prevent coking. When the indirect or direct on-line measurement of the fuel composition is applied according to the invention to control the required water amount and still maintaining substantially constant flow characteristics at the anode sides, even considerably low safety margins are enough to prevent coking.

Although the invention has been presented in reference to the attached figures and specification, the invention is by no means limited to those as the invention is subject to variations within the scope allowed for by the claims.

## Claims

1. A high temperature fuel cell system for producing electricity with fuel cells, each fuel cell comprising an anode side (100), a cathode side (102), and an electrolyte (104) between the anode side and the cathode side, and the fuel cell system comprising means (109) for recirculating gas at anode sides (100) and at least one heat exchanger (105) for arranging wanted temperature conditions in the fuel cell system,
**characterized by**, that the high temperature fuel cell system comprises:
- means (120) for determining gas composition at the anode sides (100) by obtaining at least amounts of oxygen (O) and carbon (C) for providing as composition information at least the relationship between the amounts of oxygen and carbon (O/C relationship) in said gas,
- means (122) for performing controlled gas recirculation at anode sides (100) by changing the amount and/or temperature of the gas by using said composition information as control information,
- means (124) for performing controlled auxiliary water feed to the fuel cell system by using said composition information as control information,
- means (123) for performing controlled gas feed in to the fuel cell system by using said composition information as control information,
- means (126) for controlling the rated power of the fuel cell system by controlling ratio between said controlled gas recirculation at anode sides (100) and said controlled auxiliary water feed,
- and the means (126) for controlling the rated power of the fuel cell system by controlling said means (124) for performing said controlled auxiliary water feed to the fuel cell system by using said composition information as control information by changing said water feed, when a need for such change is detected on the basis of the determined gas composition, by controlling said means (122) for performing controlled gas recirculation at anode sides by using said composition information as control information by changing said gas recirculation, when a need for such change is detected on the basis of the determined gas composition, and by controlling said means (123) for performing controlled gas feed in to the fuel cell system by using said composition information as control information by changing said gas feed, when a need for such change is detected on the basis of the determined gas composition, to change the rated power of the fuel cell system to keep electricity production conditions substantially optimal for the gas used as fuel in the high temperature fuel cell system.

2. A high temperature fuel cell system in accordance with claim 1, **characterized by**, that the fuel cell system comprises means (124) for performing controlled auxiliary water feed by changing the amount and/or temperature of the water by utilizing said composition information.

3. A high temperature fuel cell system in accordance with claim 1, **characterized by**, that the fuel cell system comprises a bypassing arrangement for directing the operation of the said at least one heat exchanger (105) by utilizing said composition information.

4. A high temperature fuel cell system in accordance with claim 1, **characterized by**, that the fuel cell system comprises a bypassing arrangement for controlling the efficiency of the said at least one heat exchanger (105) by utilizing said composition information.

5. A high temperature fuel cell system in accordance with claim 1, **characterized by**, that the fuel cell system comprises means (126) for changing the ratio between anode recirculation and auxiliary water feed for using at least mostly the same system parts and components in different gases operation.

6. A method for producing electricity in high temperature fuel cell system, in which method gas is recirculated at anode sides (100), wanted temperature conditions are arranged for producing electricity with fuel cells, a gas composition at the anode sides (100) is determined to form composition information, and an auxiliary water feed is arranged to the fuel cell system, **characterized by**, that in the method is controlled rated power by controlling ratio between the gas recirculation at anode sides (100) and said auxiliary water feed, and said rated power of the fuel cell system is controlled by performing controlled auxiliary water feed to the fuel cell system by using the determined composition information as control information by changing said water feed, when a need for such change is detected on the basis of the determined gas composition, by performing controlled gas recirculation at the anode sides (100) by controlling said gas recirculation by changing the gas amount and/or gas temperature on the basis of the determined composition information, and by performing controlled gas feed in to the fuel cell system by utilizing the determined composition information as control information by changing said gas feed, when a need for such change is detected on the basis of the determined gas composition, to change the rated power of the fuel cell system to keep electricity production conditions substantially optimal for the gas used as fuel in the high temperature fuel cell system.

7. A method in accordance with claim 6, **characterized by**, that said water feed is changed by changing the amount and/or temperature of the water by utilizing said composition information.

8. A method in accordance with claim 6, **characterized by**, that the operation in arranging wanted temperature conditions is directed by a bypassing arrangement by utilizing said composition information.

9. A method in accordance with claim 6, **characterized by**, that the efficiency in arranging wanted temperature conditions is controlled by a bypassing arrangement by utilizing said composition information.

10. A method in accordance with claim 6, **characterized by**, that the ratio between anode recirculation and auxiliary water feed is changed for using at least mostly the same system parts and components in different gases operation.

## Patentansprüche

1. Hochtemperatur-Brennstoffzellenanlage zum Erzeugen von Elektrizität mit Brennstoffzellen, wobei jede Brennstoffzelle eine Anodenseite (100), eine Kathodenseite (102) und einen Elektrolyten (104) zwischen der Anodenseite und der Kathodenseite umfasst und die Brennstoffzellenanlage Mittel (109) zum Zurückführen von Gas an den Anodenseiten (100) und wenigstens einen Wärmeaustauscher (105) zum Einrichten von gewünschten Temperaturbedingungen in der Brennstoffzellenanlage umfasst,
**dadurch gekennzeichnet, dass** die Hochtemperatur-Brennstoffzellenanlage Folgendes umfasst:
- Mittel (120) zum Feststellen einer Gaszusammensetzung an den Anodenseiten (100) durch das Gewinnen wenigstens von Mengen an Sauerstoff (O) und Kohlenstoff (C), um als Zusammensetzungsinformationen wenigstens das Verhältnis zwischen den Mengen an Sauerstoff und Kohlenstoff (das O/C-Verhältnis) in dem Gas bereitzustellen,
- Mittel (122) zum Durchführen einer gesteuerten Gasrückführung an den Anodenseiten (100) durch das Verändern der Menge und/oder der Temperatur des Gases durch die Verwendung der Zusammensetzungsinformationen als Steuerungsinformationen,
- Mittel (124) zum Durchführen einer gesteuerten Hilfswasserspeisung zu der Brennstoffzellenanlage durch die Verwendung der Zusammensetzungsinformationen als Steuerungsinformationen,
- Mittel (123) zum Durchführen einer gesteuerten Gasspeisung in die Brennstoffzellenanlage durch die Verwendung der Zusammensetzungsinformationen als Steuerungsinformationen,
- Mittel (126) zum Steuern der Nennleistung der Brennstoffzellenanlage durch das Steuern eines Verhältnisses zwischen der gesteuerten Gasrückführung an den Anodenseiten (100) und der gesteuerten Hilfswasserspeisung,
- und die Mittel (126) zum Steuern der Nennleistung der Brennstoffzellenanlage durch das Steuern der Mittel (124) zum Durchführen der gesteuerten Hilfswasserspeisung zu der Brennstoffzellenanlage durch die Verwendung der Zusammensetzungsinformationen als Steuerungsinformationen durch das Verändern der Wasserspeisung, wenn auf der Grundlage der festgestellten Gaszusammensetzung eine Notwendigkeit einer solchen Veränderung erkannt wird, durch das Steuern der Mittel (122) zum Durchführen der gesteuerten Gasrückführung an den Anodenseiten durch die Verwendung der Zusammensetzungsinformationen als Steuerungsinformationen durch das Verändern der Gasrückführung, wenn auf der Grundlage der festgestellten Gaszusammensetzung eine Notwendigkeit einer solchen Veränderung erkannt wird, und durch das Steuern der Mittel (123) zum Durchführen einer gesteuerten Gasspeisung in die Brennstoffzellenanlage durch die Verwendung der Zusammensetzungsinformationen als Steuerungsinformationen durch das Verändern der Gasspeisung, wenn auf der Grundlage der festgestellten Gaszusammensetzung eine Notwendigkeit einer solchen Veränderung erkannt wird, um die Nennleistung der Brennstoffzellenanlage zu verändern, um die Elektrizitätserzeugungsbedingungen im Wesentlichen optimal für das als Brennstoff in der Hochtemperatur-Brennstoffzellenanlage verwendete Gas zu halten.

2. Hochtemperatur-Brennstoffzellenanlage nach Anspruch 1, **dadurch gekennzeichnet, dass** die Brennstoffzellenanlage Mittel (124) zum Durchführen einer gesteuerten Hilfswasserspeisung zu der Brennstoffzellenanlage durch das Verändern der Menge und/oder der Temperatur des Wassers durch die Benutzung der Zusammensetzungsinformationen umfasst.

3. Hochtemperatur-Brennstoffzellenanlage nach Anspruch 1, **dadurch gekennzeichnet, dass** die Brennstoffzellenanlage eine Umgehungsanordnung zum Leiten des Betriebs des wenigstens einen Wärmeaustauschers (105) durch die Benutzung der Zusammensetzungsinformationen umfasst.

4. Hochtemperatur-Brennstoffzellenanlage nach Anspruch 1, **dadurch gekennzeichnet, dass** die Brennstoffzellenanlage eine Umgehungsanordnung zum Steuern des Wirkungsgrades des wenigstens einen Wärmeaustauschers (105) durch die Benutzung der Zusammensetzungsinformationen umfasst.

5. Hochtemperatur-Brennstoffzellenanlage nach Anspruch 1, **dadurch gekennzeichnet, dass** die Brennstoffzellenanlage Mittel (126) zum Steuern des Verhältnisses zwischen der Anodenrückführung und der Hilfswasserspeisung umfasst, um wenigstens zumeist die gleichen Systemteile und Bestandteile beim Betrieb mit unterschiedlichen Gasen zu verwenden.

6. Verfahren zum Erzeugen von Elektrizität in einer Hochtemperatur-Brennstoffzellenanlage, wobei bei dem Verfahren Gas an den Anodenseiten (100) zurückgeführt wird, gewünschte Temperaturbedingungen zum Erzeugen von Elektrizität mit Brennstoffzellen eingerichtet werden, eine Gaszusammensetzung an den Anodenseiten (100) festgestellt wird, um Zusammensetzungsinformationen zu bilden, und eine Hilfswasserspeisung zu der Brennstoffzellenanlage eingerichtet wird, **dadurch gekennzeichnet, dass** bei dem Verfahren die Nennleistung durch das Steuern eines Verhältnisses zwischen der Gasrückführung an den Anodenseiten (100) und der Hilfswasserspeisung gesteuert wird und die Nennleistung der Brennstoffzellenanlage gesteuert wird durch das Durchführen der gesteuerten Hilfswasserspeisung zu der Brennstoffzellenanlage durch die Verwendung der festgestellten Zusammensetzungsinformationen als Steuerungsinformationen durch das Verändern der Wasserspeisung, wenn auf der Grundlage der festgestellten Gaszusammensetzung eine Notwendigkeit einer solchen Veränderung erkannt wird, durch das Durchführen der gesteuerten Gasrückführung an den Anodenseiten (100) durch das Verändern der Gasmenge und/oder der Gastemperatur auf der Grundlage der festgestellten Zusammensetzungsinformationen und durch das Durchführen einer gesteuerten Gasspeisung in die Brennstoffzellenanlage durch die Verwendung der festgestellten Zusammensetzungsinformationen als Steuerungsinformationen durch das Verändern der Gasspeisung, wenn auf der Grundlage der festgestellten Gaszusammensetzung eine Notwendigkeit einer solchen Veränderung erkannt wird, um die Nennleistung der Brennstoffzellenanlage zu verändern, um die Elektrizitätserzeugungsbedingungen im Wesentlichen optimal für das als Brennstoff in der Hochtemperatur-Brennstoffzellenanlage verwendete Gas zu halten.

7. Verfahren nach Anspruch 6, **dadurch gekennzeichnet, dass** die Wasserspeisung durch das Verändern der Menge und/oder der Temperatur des Wassers durch die Benutzung der Zusammensetzungsinformationen verändert wird.

8. Verfahren nach Anspruch 6, **dadurch gekennzeichnet, dass** der Betrieb beim Einrichten von gewünschten Temperaturbedingungen durch eine Umgehungsanordnung durch die Benutzung der Zusammensetzungsinformationen geleitet wird.

9. Verfahren nach Anspruch 6, **dadurch gekennzeichnet, dass** der Wirkungsgrad beim Einrichten von gewünschten Temperaturbedingungen durch eine Umgehungsanordnung durch die Benutzung der Zusammensetzungsinformationen geleitet wird.

10. Verfahren nach Anspruch 6, **dadurch gekennzeichnet, dass** das Verhältnis zwischen der Anodenrückführung und der Hilfswasserspeisung verändert wird, um wenigstens zumeist die gleichen Systemteile und Bestandteile beim Betrieb mit unterschiedlichen Gasen zu verwenden.

## Revendications

1. Système de piles à combustible à température élevée pour produire de l'électricité avec des piles à combustible, chaque pile à combustible comprenant une anode (100), une cathode (102), et une électrolyte (104) entre l'anode et la cathode, et le système de piles comprenant un moyen (109) pour la recirculation de gaz à l'anode (100) et au moins un échangeur de chaleur (105) pour régler les températures voulues dans le système de piles à combustible,
**caractérisé en ce que** le système de piles à combustible à température élevée comprend :
- un moyen (120) pour déterminer la composition du gaz à l'anode (100) en obtenant au moins des quantités d'oxygène (O) et de carbone (C) pour fournir comme informations de composition au moins la relation entre les quantités d'oxygène et de carbone (relation O/C) dans ledit gaz,
- un moyen (122) pour effectuer la recirculation de gaz contrôlée à l'anode (100) en changeant la quantité et / ou la température du gaz en utilisant ladite information de composition comme information de contrôle,
- un moyen (124) pour fournir une alimentation en eau auxiliaire contrôlée au système de piles à combustible en utilisant ladite information de composition comme information de contrôle,
- un moyen (123) pour fournir une alimentation de gaz contrôlée dans le système de piles à combustible en utilisant ladite information de composition comme information de contrôle,
- un moyen (126) pour contrôler la puissance évaluée du système de piles à combustible en contrôlant le pourcentage entre ladite recirculation de gaz contrôlée à l'anode (100) et ladite alimentation d'eau auxiliaire contrôlée,
- et un moyen (126) pour contrôler la puissance évaluée du système de piles à combustible en contrôlant ledit moyen (124) pour la fourniture de ladite alimentation d'eau auxiliaire contrôlée au système de piles à combustible en utilisant ladite information de composition comme information de contrôle en changeant ladite alimentation d'eau, lorsque le besoin d'un tel changement est détecté sur la base de la composition de gaz déterminée ; en contrôlant ledit moyen (122) pour la réalisation de la recirculation de gaz contrôlée à l'anode en utilisant ladite information de composition comme information de contrôle en changeant ladite recirculation de gaz, quand le besoin pour un tel changement est détecté sur la base de la composition de gaz déterminée ; et en contrôlant ledit moyen (123) pour réalisation de l'alimentation de gaz contrôlée dans le système de piles à combustible en utilisant ladite information de composition comme information de contrôle en changeant ladite alimentation de gaz, lorsque le besoin d'un tel changement est détecté sur la base de la composition de gaz déterminée, pour changer la puissance évaluée du système de piles à combustible afin de garder les conditions de production d'électricité substantiellement optimales pour le gaz utilisé comme combustible dans le système de piles à combustible à température élevée.

2. Système de piles à combustible à température élevée selon la revendication 1, **caractérisé en ce que** le système de piles à combustible comprend un moyen (124) pour réaliser l'alimentation d'eau auxiliaire contrôlée en changeant la quantité et/ou la température de l'eau en utilisant ladite information de composition.

3. Système de piles à combustible à température élevée selon la revendication 1, **caractérisé en ce que** le système de piles à combustible comprend un dispositif de dérivation pour diriger le fonctionnement dudit au moins unique échangeur de chaleur (105) en utilisant ladite information de composition.

4. Système de piles à combustible à température élevée selon la revendication 1, **caractérisé en ce que** le système de piles à combustible comprend un dispositif de dérivation pour contrôler l'efficacité dudit au moins unique échangeur de chaleur (105) en utilisant ladite information de composition.

5. Système de piles à combustible à température élevée selon la revendication 1, **caractérisé en ce que** le système de piles à combustible comprend un moyen (126) pour changer le pourcentage entre la recirculation et l'alimentation d'eau auxiliaire à l'anode afin d'utiliser au moins le plus souvent les mêmes composants et parties du système dans les différentes exploitations de gaz.

6. Procédé pour produire de l'électricité dans un système de piles à combustible à température élevée, procédé dans lequel le gaz est mis en recirculation à l'anode (100), les conditions de température voulues sont arrangées pour produire de l'électricité avec les piles à combustible, une composition de gaz à l'anode (100) est déterminée pour former une information de composition, et une alimentation d'eau auxiliaire est agencée au système de piles à combustible, **caractérisé en ce que** dans le procédé la puissance évaluée est contrôlée en contrôlant le pourcentage entre la recirculation de gaz (100) et ladite alimentation d'eau auxiliaire à l'anode, et ladite puissance évaluée du système de piles à combustible est contrôlée en fournissant l'alimentation d'eau auxiliaire contrôlée au système de piles à combustible en utilisant l'information de composition déterminée comme information de contrôle en changeant ladite alimentation d'eau, lorsque le besoin pour un tel changement est détecté sur la base de la composition de gaz déterminée ; en réalisant la recirculation de gaz contrôlée à l'anode (100) en contrôlant ladite recirculation de gaz en changeant la quantité de gaz et / ou la température de gaz sur la base de l'information de composition déterminée, et en fournissant l'alimentation de gaz contrôlée dans le système de piles à combustible en utilisant l'information de composition déterminée comme information de contrôle en changeant ladite alimentation de gaz, lorsque le besoin d'un tel changement est détecté sur la base de la composition de gaz déterminée, pour changer la puissance évaluée du système de piles à combustible afin de maintenir les conditions de production d'électricité substantiellement optimales pour le gaz utilisé comme combustible dans le système de piles à combustible à température élevée.

7. Procédé en accord avec la revendication 6, **caractérisé en ce que** ladite alimentation d'eau est changée en changeant la quantité et / ou la température de l'eau en utilisant ladite information de composition.

8. Procédé en accord avec la revendication 6, **caractérisé en ce que** le fonctionnement dans l'agencement des conditions de température voulues est dirigé par un dispositif de dérivation en utilisant ladite information de composition.

9. Procédé en accord avec la revendication 6, **caractérisé en ce que** l'efficacité dans l'agencement des conditions de température voulues est contrôlée par un dispositif de dérivation en utilisant ladite information de composition.

10. Procédé en accord avec la revendication 6, **caractérisé en ce que** le pourcentage entre la recirculation anode et l'alimentation d'eau auxiliaire est changé pour utiliser le plus souvent possible les mêmes composants et parties du système dans différentes exploitations de gaz.
